# EUROPEAN PATENT APPLICATION

(11) **EP 4 362 154 A1**
(43) Date of publication of application: **01.05.2024**
(21) Application number: 23206470.9
(22) Date of filing: 27.10.2023
(51) Int. Cl.: H01M 10/04, H01M 50/107, H01M 50/152, H01M 50/148, H01M 50/167, H01M 50/545, H01M 50/547, H01M 50/553, H01M 50/559, H01M 50/567, H01M 10/0587, H01M 50/179, H01M 50/552, H01M 50/583

(54) **CYLINDRICAL SECONDARY BATTERY**

(30) Priority: 27.10.2022 KR 20220140276
(71) Applicant: Samsung SDI Co., Ltd., Yongin-si, Gyeonggi-do 17084 (KR)
(72) Inventor: KIM, Myung Seob, 17084 Yongin-si (KR); JUNG, Hyun Ki, 17084 Yongin-si (KR); PARK, Gun Gue, 17084 Yongin-si (KR); KO, Sung Gwi, 17084 Yongin-si (KR)
(74) Representative: Marks & Clerk LLP

(57) **Abstract**

The present disclosure relates to a cylindrical secondary battery (100) allowing the loss of space inside a case to be reduced. As an example, the present disclosure provides a cylindrical secondary battery (100) including an electrode assembly (120) which includes a first electrode plate (121), a separator (123), and a second electrode plate (122), a case (110) which has a cylindrical shape, in which the electrode assembly (120) is accommodated, and of which a lower portion is open, a terminal (150) which passes through an upper surface portion (111) of the case (110) and is coupled to the case through a first gasket (116), a first current collector plate (130) which is interposed between an upper surface of the electrode assembly (120) and the case (110) and electrically connects the first electrode plate (121) and the terminal (150), and a cap plate (160) configured to seal the lower end portion of the case (110), wherein the case (110) includes the upper surface portion (111) having a flat plate shape, a central portion (113) which is positioned at a central portion of the upper surface portion (111), has a terminal hole (113b), and protrudes outward further than the upper surface portion (111), and a side surface portion (112) extending downward from an edge of the upper surface portion (111).

## Description

### BACKGROUND

### 1. Field

Aspects of embodiments of the present disclosure relate to a cylindrical secondary battery.

### 2. Description of the Related Art

In general, a cylindrical secondary battery includes an electrode assembly having a cylindrical shape, a can having a cylindrical shape for accommodating the electrode assembly and an electrolyte, and a cap assembly which is an assembly coupled to a side opening of the can to seal the can and electrically connected to the electrode assembly to electrically connect external components and the electrode assembly.

In the case of a battery module in which a plurality of cylindrical secondary batteries are connected and used, a bus bar may be connected to each of upper and lower portions of the secondary batteries, and, thus, there may be problems in that a structure is complicated and a process time is increased.

In order to solve such problems, a can has terminal holes formed at an open side and a side opposite to the open side, and a positive electrode terminal is coupled to the terminal hole to have a structure insulated from the can. In such a structure, since a bus bar is provided on the same surface of a secondary battery, it is easy to connect the bus bar in a secondary battery module.

However, there may be a need for a welding or bonding process to electrically connect a terminal and a current collector plate of an electrode assembly, and there may be a need to secure space for the connection.

The above information disclosed in this background section is provided for enhancement of understanding of the background of the invention and, therefore, it may contain information that does not constitute the related art.

### SUMMARY

According to an aspect of embodiments of the present disclosure, a cylindrical secondary battery is provided in which, even when a first current collector plate of a case is spaced apart from the case as much as a height of a lower fastening portion, since a central portion of the case is convex in an outward direction or a terminal coupling portion of the first current collector plate is convex in an inward direction, it is possible to reduce a separation distance between an upper surface portion of the case and the first current collector plate, and thereby reduce a loss of internal space of the case.

According to one or more embodiments, a cylindrical secondary battery includes an electrode assembly including a first electrode plate, a separator, and a second electrode plate, a case having a cylindrical shape, in which the electrode assembly is accommodated, and of which a lower end portion is open, a terminal which passes through an upper surface portion of the case and is coupled to the case through a first gasket, a first current collector plate which is interposed between an upper surface of the electrode assembly and the case and electrically connects the first electrode plate and the terminal, and a cap plate configured to seal the lower end portion of the case, wherein the case includes the upper surface portion having a flat plate shape, a central portion which is positioned at a central portion of the upper surface portion, has a terminal hole, and protrudes outward further than the upper surface portion, and a side surface portion extending downward from an edge of the upper surface portion.

The terminal hole may have a circular shape or a polygonal shape.

The terminal may include a head positioned on a central portion of the case, and a fastening portion which extends from the central portion of the head in an inward direction of the case, is integrally formed with the head, and passes through the terminal hole.

**An** outer diameter of the fastening portion may correspond to a shape of the terminal hole in a plan view, and a diameter of the fastening portion may be less than that of the terminal hole.

**A** planar size of the head may be greater than a planar size of the fastening portion.

**The** fastening portion may include an upper fastening portion connected to the head and positioned in the terminal hole of the upper surface portion of the case, and a lower fastening portion extending downward from the upper fastening portion and positioned inside the case.

An outer diameter of the lower fastening portion may be greater than an outer diameter of the upper fastening portion.

An outer diameter of the lower fastening portion may be less than an outer diameter of the upper fastening portion, and a groove may be formed inward from an outer surface of the lower fastening portion.

The cylindrical secondary battery may further include a coupling member inserted into and coupled to the groove formed outside the lower fastening portion.

The case may further include an inclined connection portion connecting the central portion and the upper surface portion.

The central portion may have a circular shape or a polygonal shape in a plan view.

A thickness of the central portion may be less than or equal to a thickness of the upper surface portion.

A thickness of the central portion may be in a range of 50% to 100% of a thickness of the upper surface portion.

The first gasket may be arranged between the head of the terminal and an upper surface of the central portion and between the terminal hole and the fastening portion of the terminal.

The case may further include a bent portion bent in a rounded shape between the upper surface portion and the side surface portion.

**The** cylindrical secondary battery may further include an inner insulating member covering inner surfaces of the central portion, the connection portion, and the upper surface portion of the case.

**The** cylindrical secondary battery may further include an inner insulating member covering inner surfaces of the central portion, the connection portion, the upper surface portion, and the bent portion of the case.

**The** cylindrical secondary battery may further include an inner insulating member covering an inner surface of the central portion.

In the electrode assembly, a positive electrode uncoated portion not coated with a positive electrode active material may protrude upward from the first electrode plate, and a negative electrode uncoated portion not coated with a negative electrode active material may protrude downward from the second electrode plate.

The case may include a beading part recessed into the case on the cap plate, and a crimping part formed below the cap plate by the lower end portion of the case being bent in an inward direction and configured to fix the cap plate.

The cylindrical secondary battery may further include a second gasket arranged between the cap plate and the beading part and between the cap plate and the crimping part, wherein the cap plate is non-polar.

A lower end portion of the second gasket may protrude further than the crimping part toward a center of the cap plate.

The cap plate may include an edge region interposed between the crimping part and the beading part, and a central region which is concave in an inward direction of the case relative to the edge region.

The cap plate may include a vent which is a notch formed upward from a lower surface of the cap plate in the central region.

The vent may have at least one pattern of which a planar shape is a ring shape, a straight shape, or a curved shape spaced apart from a center.

The cylindrical secondary battery may further include a second current collector plate which has a circular plate shape corresponding to a lower surface of the electrode assembly and is in contact with and electrically connected to the second electrode plate exposed at the lower surface of the electrode assembly.

The second current collector plate may include a planar portion which has a circular shape and is in contact with the lower surface of the electrode assembly, and an extension portion extending downward from an edge of the planar portion.

The extension portion of the second current collector plate may be interposed between the second gasket and the beading part.

The extension portion of the second current collector plate may be bent or rounded along the beading part.

According to one or more embodiments of the present disclosure, a cylindrical secondary battery includes, an electrode assembly including a first electrode plate, a separator, and a second electrode plate, a case having a cylindrical shape, in which the electrode assembly is accommodated, and of which a lower end portion is open, a terminal passing through an upper surface portion of the case and coupled to the case through a first gasket, a first current collector plate arranged between an upper surface of the electrode assembly and the case and electrically connecting the first electrode plate and the terminal, and a cap plate configured to seal the lower end portion of the case, wherein the first current collector plate includes, an electrode plate coupling portion connected to the first electrode plate of the electrode assembly, and a terminal coupling portion at a central portion of the electrode plate coupling portion and protruding toward the electrode assembly.

The first current collector plate may further include a fuse portion between the terminal coupling portion and the electrode plate coupling portion.

The fuse portion may include a fuse hole formed along a portion of an outer periphery of the terminal coupling portion, and an electrode plate connection portion connecting the terminal coupling portion and the electrode plate coupling portion.

The electrode plate connection portion may obliquely or vertically connect the terminal coupling portion and the electrode plate coupling portion with a step difference therebetween.

The first current collector plate may include a plurality of buffer slits positioned outside the fuse portion to be symmetrical to each other with respect to the fuse portion.

A buffer slit of the plurality of buffer slits may have a "U" shape.

The fuse portion may further include protrusion holes formed at end portions (e.g., both end portions) of the fuse hole, and the protrusion holes may protrude toward and be close to each other.

The fuse portion may further include extension holes extending from ends (e.g., both ends) of the fuse hole toward an outer side of the first current collector plate, and the extension holes may be in parallel.

The fuse portion may include one or more fuse holes, and the fuse holes may be located concentrically with respect to a center of the first current collector plate.

The terminal may include a head positioned on a central portion of the case, and a fastening portion which extends in an inward direction of the case from the central portion of the head, is integrally formed with the head, and passes through the terminal hole.

A diameter of the terminal coupling portion may be greater than that of a lower surface of the fastening portion and may be less than that of a core hole of the electrode assembly.

The terminal coupling portion may be inserted into a core hole of the electrode assembly.

At least some of the above and other features of the invention are set out in the claims.

### BRIEF DESCRIPTION OF DRAWINGS

FIG. 1 is a perspective view illustrating a cylindrical secondary battery according to one or more embodiments of the present disclosure.
FIG. 2 is a cross-sectional view of the cylindrical secondary battery shown FIG. 1.
FIG. 3 is an enlarged cross-sectional view illustrating a region "3" of FIG. 2.
FIGS. 4A and 4B are plan views of some embodiments of a case before a terminal is coupled to the case shown in FIGS. 1 and 2.
FIGS. 5A and 5B are enlarged cross-sectional views illustrating some embodiments of an inner insulating member of the case shown in FIGS. 1 and 2.
FIG. 6 is a cross-sectional view illustrating a cylindrical secondary battery according to one or more embodiments of the present disclosure.
FIGS. 7A and 7B are a plan view and a cross-sectional view of a first current collector plate in the cylindrical secondary battery shown in FIG. 6.
FIG. 8 is a cross-sectional view illustrating a first current collector plate of the cylindrical secondary battery shown in FIG. 6, according to an embodiment.
FIGS. 9 to 13 are plan views illustrating some embodiments of a first current collector plate in the cylindrical secondary battery shown in FIG. 6.

### DETAILED DESCRIPTION

Herein, some embodiments of the present disclosure will be described, in further detail, with reference to the accompanying drawings.

Examples of the present disclosure are provided to more completely explain the present disclosure to those skilled in the art, and the following examples may be modified in various other forms. Thus, the present disclosure may be embodied in many different forms and should not be construed as being limited to the embodiments set forth herein. Rather, these embodiments are provided so that this disclosure will be thorough and complete and will convey the aspects and features of the present disclosure to those skilled in the art.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented above or over the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

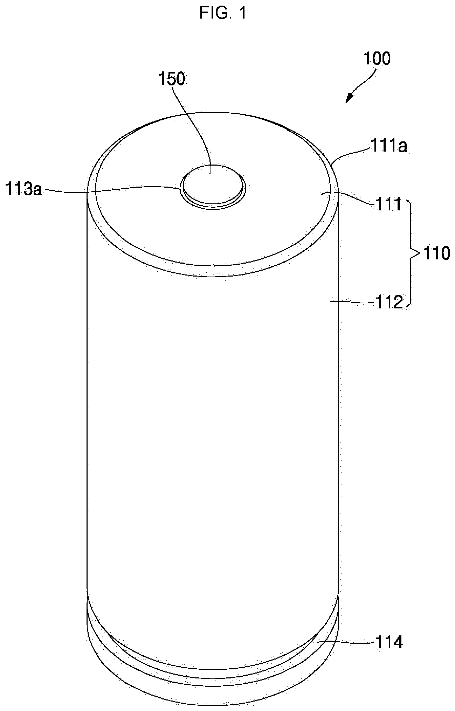

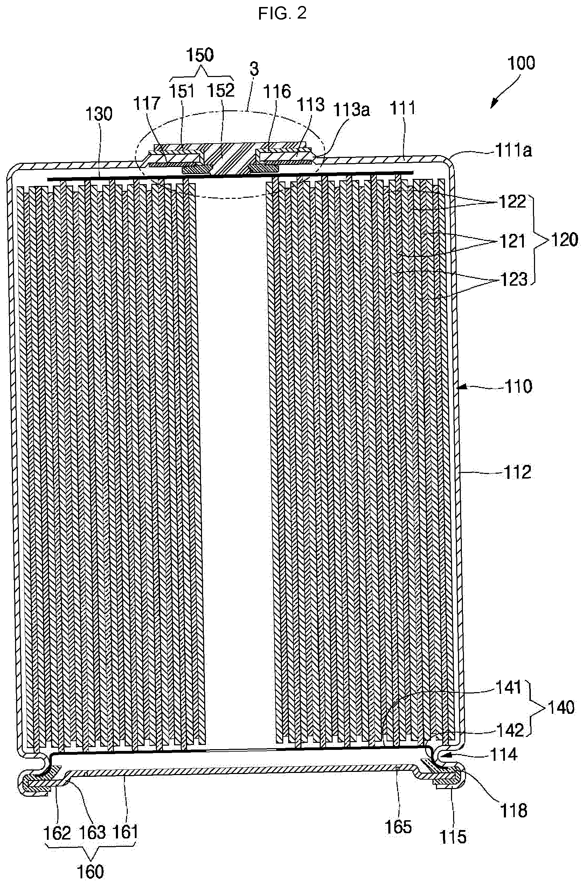

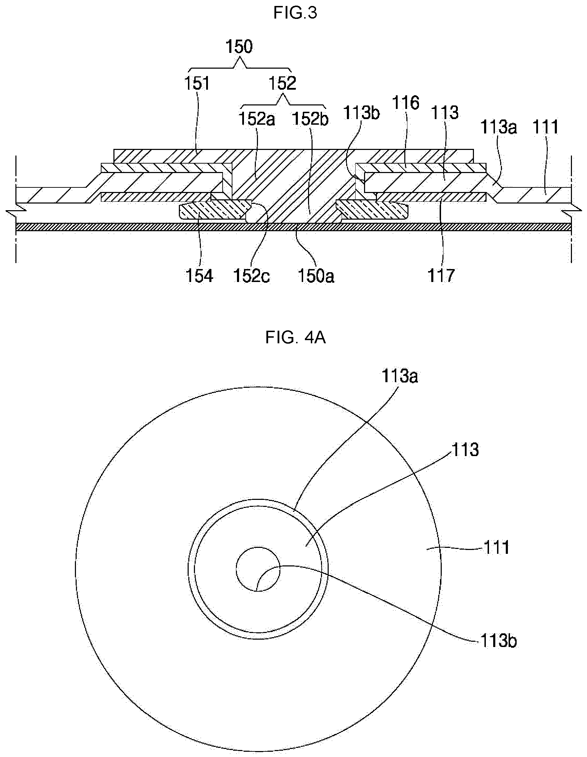

FIG. 1 is a perspective view illustrating a cylindrical secondary battery 100 according to one or more embodiments of the present disclosure; FIG. 2 is a cross-sectional view of the cylindrical secondary battery 100 shown in FIG. 1 in a longitudinal direction; and FIG. 3 is an enlarged cross-sectional view illustrating a region "3" of FIG. 2.

As shown in FIGS. 1 to 3, the cylindrical secondary battery 100 according to an embodiment of the present disclosure includes a case 110, an electrode assembly 120 accommodated in the case 110, a terminal 150 coupled to a terminal hole formed at an end portion of the case 110, and a cap plate 160 to seal an opening formed at another end portion of the case 110.

The case 110 includes an upper surface portion 111 having a circular shape and a side surface portion 112 extending downward from an edge of the upper surface portion 111 to have a certain length. In an embodiment, the upper surface portion 111 and the side surface portion 112 of the case 110 may be integrally formed. In an embodiment, a bent portion 111a bent in a rounded shape may be further included between the upper surface portion 111 and the side surface portion 112.

The upper surface portion 111 having the circular shape may have a flat circular plate shape, and a central portion 113 may protrude in an outward direction away from the electrode assembly 120. The central portion 113 may be positioned at a central portion of the upper surface portion 111 and may be positioned further outside the case 110 than the upper surface portion 111 such that a stepped portion may be provided between the central portion 113 and the upper surface portion 111. A connection portion 113a connecting an outer edge of the central portion 113 and an inner edge of the upper surface portion 111 may be further included. The connection portion 113a may be provided to be inclined due to the stepped portion between the central portion 113 and the upper surface portion 111.

In an embodiment, the central portion 113 may be formed by pressing the flat upper surface portion 111 from inside to outside through deep drawing. A planar shape of the central portion 113 may be a circular or polygonal shape. Of course, the connection portion 113a may have a shape corresponding to a shape of the central portion 113. That is, when the planar shape of the central portion 113 is a circular shape, the connection portion 113a may connect the central portion 113 and the upper surface portion 111 in a circular ring shape. In an embodiment in which the central portion 113 has a polygonal shape, the connection portion 113a may connect the central portion 113 and the upper surface portion 111 in a polygonal ring shape.

In an embodiment, a thickness of the central portion 113 may be less than or equal to a thickness of the upper surface portion 111. In an embodiment, the thickness of the central portion 113 may be in a range of 50% to 100% of that of the upper surface portion 111. In an embodiment, the central portion 113 may be formed by pressing a flat planar surface through deep drawing and thus may have a thickness that is less than or equal to that of the upper surface portion 111. Also, a thickness of the connection portion 113a may be less than or equal to that of the upper surface portion 111.

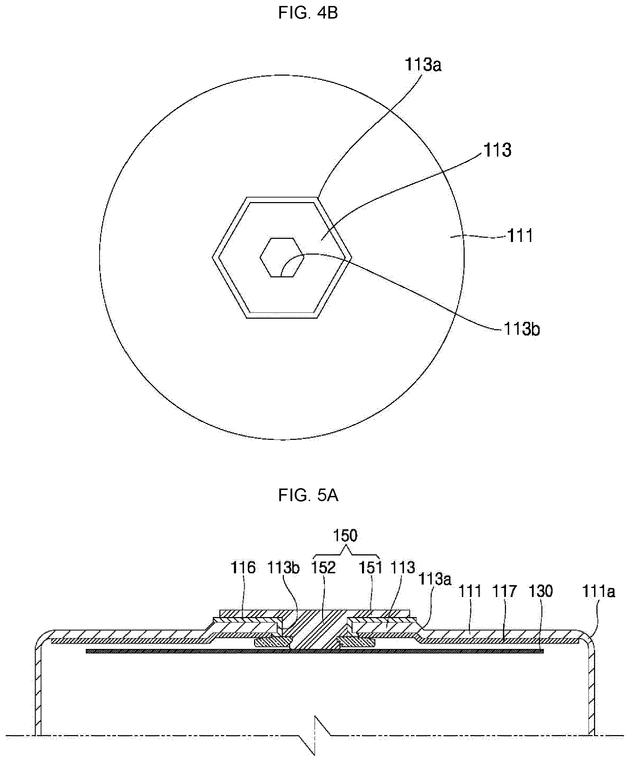

The central portion 113 may have a terminal hole 113b passing through an approximately central portion thereof. The terminal 150 may be inserted into and coupled to the terminal hole 113b of the central portion 113. The terminal hole 113b may have a circular or polygonal shape. FIGS. 4A and 4B illustrate a plan view of the case 110 according to some embodiments. As shown in FIG. 4A, the terminal hole 113b of the case 110 may have a circular shape, and as shown in FIG. 4B, the terminal hole 113b may have a polygonal shape. Although the terminal hole 113b is illustrated in FIG. 4B as having a hexagonal shape, the terminal hole 113b may have a triangular shape, a quadrangular shape, or another polygonal shape.

In an embodiment, a planar shape of a fastening portion 152 of the terminal 150 may correspond to a shape of the terminal hole 113b. That is, when the terminal hole 113b has a circular shape, the fastening portion 152 of the terminal 150 may also have a cylindrical shape. As described above, when the terminal hole 113b has a circular shape, the terminal hole 113b may not have separate corner. Thus, when fastened to the terminal hole 113b, the terminal 150 may be coupled irrespective of an angle.

In addition, when the terminal hole 113b has a polygonal shape, the fastening portion 152 of the terminal 150 may also have a polygonal column shape. As described above, when the terminal hole 113b has a polygonal shape, the terminal hole 113b has corners. When the terminal 150 is fastened and coupled, there is a limitation on an angle, but the terminal 150 may be prevented or substantially prevented from rotating after the fastening.

A first gasket 116 for sealing and electrical insulating may be further interposed between the terminal hole 113b and the terminal 150. Therefore, in an embodiment, a planar outer diameter of the fastening portion 152 of the terminal 150 is less than that of the terminal hole 113b. The first gasket 116 blocks contact between the terminal 150 and the case 110 to electrically separate the terminal 150 from the case 110. The first gasket 116 may seal the terminal hole 113b of the central portion 113 of the case 110. In an embodiment, the first gasket 116 may be made of a resin material, such as polyethylene (PE), polypropylene (PP), or polyethylene terephthalate (PET).

In an embodiment, the case 110 may further include an inner insulating member 117 provided to cover an inner surface of the central portion 113. In an embodiment, the inner insulating member 117 may be attached to the inner surface of the central portion 113 through coating or bonding. The inner surface of the central portion 113 may be a surface facing an upper surface of a first current collector plate 130 interposed between the case 110 and the electrode assembly 120 and may be a lower surface of the central portion 113. The inner insulating member 117 may prevent or substantially prevent contact between the central portion 113 of the case 110 and a first electrode plate 121 of the electrode assembly 120. The inner insulating member 117 may prevent or substantially prevent contact between the case 110 and the first current collector plate 130.

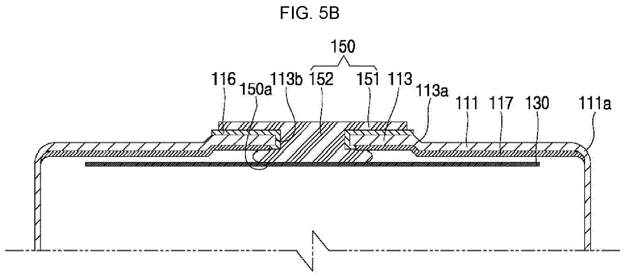

As another example, as shown in FIG. 5A, the inner insulating member 117 may extend to an inner surface of the connection portion 113a and an inner surface of the upper surface portion 111. As still another example, as shown in FIG. 5B, the inner insulating member 117 may extend to the inner surface of the connection portion 113a, the inner surface of the upper surface portion 111, and an inner surface of the bent portion 111a. As described above, the inner insulating member 117 is formed to cover the inner surface of the upper surface portion 111 or the inner surfaces of the upper surface portion 111 and the bent portion 111a, thereby more easily preventing or substantially preventing contact between the case 110 and the first current collector plate 130.

Since the central portion 113 of the case 110 protrudes in an outward direction, a separation distance between the upper surface portion 111 and the first current collector plate 130 is reduced, thereby reducing the loss of internal space of the case 110. That is, since the separation distance between the upper surface portion 111 and the first current collector plate 130 is reduced in the case 110, in an embodiment, the inner insulating member 117 is formed to cover the inner surface of the upper surface portion 111 or the inner surfaces of the upper surface portion 111 and the bent portion 111a compared to a case in which the inner insulating member 117 is positioned only inside the central portion 113.

A lower end portion of the case 110 is open during a manufacturing process of the cylindrical secondary battery 100. Therefore, during the manufacturing process of the cylindrical secondary battery 100, the electrode assembly 120 may be inserted through the open lower end portion of the case 110 together with an electrolyte. In this case, the electrolyte and the electrode assembly 120 may be inserted into the case 110 in a state in which the open lower end portion faces upward. After the electrolyte and the electrode assembly 120 are inserted into the case 110, the cap plate 160 may be coupled to the open lower end portion to seal the inside of the case 110. The electrolyte enables movement of lithium ions between the first electrode plate 121 and a second electrode plate 122 constituting the electrode assembly 120. The electrolyte may be a non-aqueous organic electrolyte that is a mixture of a lithium salt and a high-purity organic solvent. In addition, the electrolyte may be a polymer using a polyelectrolyte or a solid electrolyte, but a type of the electrolyte is not limited thereto.

The case 110 may be made of steel, a steel alloy, aluminum, an aluminum alloy, or an equivalent thereof, but a material thereof is not limited thereto. In an embodiment, a beading part 114 recessed into the case 110 may be formed on the cap plate 160, and a crimping part 115 bent inward may be formed below the cap plate 160, such that the electrode assembly 120 does not deviate to the outside.

The beading part 114 is formed after the electrode assembly 120 is inserted through the open lower end portion of the case 110, thereby preventing or substantially preventing the electrode assembly 120 from being separated from the case 110.

The electrode assembly 120 includes the first electrode plate 121, the second electrode plate 122, and a separator 123. In an embodiment, the first electrode plate 121 may be a positive electrode plate, and the second electrode plate 122 may be a negative electrode plate. Of course, the reverse is also possible. Herein, for convenience of description, a case in which the first electrode plate 121 is the positive electrode plate and the second electrode plate 122 is the negative electrode plate will be described.

In an embodiment, the first electrode plate 121 is formed by coating at least one surface of a plate-shaped metal foil made of aluminum (Al) with a positive electrode active material, such as transition metal oxide. A positive electrode uncoated portion not coated with a positive electrode active material may be provided at an upper end portion of the first electrode plate 121. Such a positive electrode uncoated portion may protrude in an upward direction of the electrode assembly 120. That is, the positive electrode uncoated portion of the first electrode plate 121 may protrude upward further than the second electrode plate 122 and the separator 123.

In an embodiment, the second electrode plate 122 is formed by coating at least one surface of a plate-shaped metal foil made of copper (Cu) or nickel (Ni) with a negative electrode active material, such as graphite or carbon. A negative electrode uncoated portion not coated with a negative electrode active material may be provided at a lower end portion of the second electrode plate 122. Such a negative electrode uncoated portion may protrude in a downward direction of the electrode assembly 120. That is, the negative electrode uncoated portion of the second electrode plate 122 may protrude downward further than the first electrode plate 121 and the separator 123.

The separator 123 may be made of PE or PP, but the present disclosure is not limited thereto. The separator prevents or substantially prevents an electrical short circuit between the first electrode plate 121 and the second electrode plate 122 and enables movement of lithium ions.

After the first electrode plate 121, the second electrode plate 122, and the separator 123 are stacked, the electrode assembly 120 is wound from a winding end and wound in an approximately cylindrical shape. In addition, in the electrode assembly 120, the positive electrode uncoated portion not coated with a positive electrode active material may protrude upward from the first electrode plate 121, and the negative electrode uncoated portion not coated with a negative electrode active material may protrude downward from the second electrode plate 122. In an embodiment, in the electrode assembly 120, an outermost positive electrode uncoated portion does not protrude upward, and an outermost negative electrode uncoated portion does not protrude downward. That is, in the electrode assembly 120, stepped portions that are concave relative to other regions may be provided at upper and lower outermost portions. In such an electrode assembly 120, when the inner insulating member 117 is not formed on the bent portion 111a of the case 110, contact between the electrode assembly 120 and the case 110 may be prevented or substantially prevented.

The first current collector plate 130 may be a circular metal plate having a shape corresponding to an upper surface of the electrode assembly 120. A planar size of the first current collector plate 130 may be less than or equal to a size of the upper surface of the electrode assembly 120. In an embodiment, the first current collector plate 130 may be made of aluminum (Al). In a state in which a lower surface of the first current collector plate 130 is in contact with the upper surface of the electrode assembly 120, the first current collector plate 130 may be fixed and electrically connected to the first electrode plate 121 exposed at an upper portion of the electrode assembly 120 through welding. In a state in which an upper surface of the first current collector plate 130 is in contact with a lower surface of the terminal 150, the first current collector plate 130 may be fixed and electrically connected to the terminal 150 through welding. The first current collector plate 130 serves as a passage for current flow between the first electrode plate 121 of the electrode assembly 120 and the terminal 150. After the first current collector plate 130 is welded to the electrode assembly 120, the first current collector plate 130 may be stored in the case 110 and then welded to the terminal 150. In an embodiment, the first current collector plate 130 may have a thickness of 0.2 mm to 1.5 mm. The thickness of the first current collector plate 130 is less than a lower thickness of the fastening portion 152 of the terminal 150 to be described below, thereby improving weldability.

A second current collector plate 140 may include a planar portion 141 having a circular shape corresponding to a lower surface of the electrode assembly 120 and an extension portion 142 extending downward from an edge of the planar portion 141. An upper surface of the planar portion 141 may be in contact with the lower surface of the electrode assembly 120. In a state in which the upper surface of the planar portion 141 is in contact with the lower surface of the electrode assembly 120, the planar portion 141 may be fixed and electrically connected to the second electrode plate 122 exposed at a lower portion of the electrode assembly 120 through welding.

The extension portion 142 may extend downward from the edge of the planar portion 141. As an example, a plurality of extension portions 142 may be provided to be spaced apart from each other along the edge of the planar portion 141. In an embodiment, the extension portion 142 may be in contact with an inner surface of the beading part 114. That is, the extension portion 142 may be rounded or bent along the beading part 114. Here, the inner surface may be an inner surface of the case 110. The extension portion 142 may have an end positioned between the beading part 114 and a second gasket 118. Such an extension portion 142 may be in contact with and coupled to the beading part 114 of the case 110. As an example, the extension portion 142 may be coupled through welding while in contact with the inner surface of the beading part 114 of the case 110. The second current collector plate 140 serves as a passage for current flow between the second electrode plate 122 of the electrode assembly 120 and the case 110. In an embodiment, the case 110 may be a negative terminal. In an embodiment, the second current collector plate 140 may have a hole formed at a central portion of the planar portion 141 to pass through an upper surface and a lower surface thereof, and the electrolyte may be easily injected into the electrode assembly 120 through the hole.

The terminal 150 may be inserted into the terminal hole 113b of the case 110 and electrically connected to the first current collector plate 130. The terminal 150 may be electrically connected to the first electrode plate 121 of the electrode assembly through the first current collector plate 130. In an embodiment, the terminal 150 may be a positive terminal. The terminal 150 and the case 110 may have different polarities. In an embodiment, the terminal 150 may be made of a same material as the first current collector plate 130 and the first electrode plate 121 or a similar material.

The terminal 150 may include a head 151 that is a portion exposed on the case 110 and the fastening portion 152 that is a portion extending from a central portion of the head 151 in an inward direction of the case 110. A planar size of the head 151 may be greater than a planar size of the fastening portion 152. That is, a diameter of the head 151 may be greater than a diameter of the fastening portion 152. In the terminal 150, an upper end of the fastening portion 152 may be connected to a lower surface of the head 151, and, in an embodiment, the head 151 and the fastening portion 152 may be integrally formed. The terminal 150 may be coupled to the terminal hole 113b of the case 110 from outside to inside. In this case, the first gasket 116 may be interposed between the terminal 150 and the case 110.

The fastening portion 152 may include an upper fastening portion 152a positioned in the terminal hole 113b of the case 110 and a lower fastening portion 152b positioned inside the case 110. In an embodiment, an outer diameter of the lower fastening portion 152b may be less than that of the upper fastening portion 152a. In an embodiment, after the terminal 150 is inserted into the terminal hole 113b of the case 110 from outside to inside, a coupling portion 154 may be coupled to an outer side of the lower fastening portion 152b positioned inside the case 110 to fix the terminal 150. The coupling portion 154 may be made of an insulating material. In an embodiment, the terminal 150 may have a groove 152c formed inward from an outer surface of the lower fastening portion 152b to be approximately parallel with a lower surface of the fastening portion 152. The coupling portion 154 may be inserted into the groove 152c of the lower fastening portion 152b and coupled to the terminal 150. In this case, the coupling portion 154 may be fixed to the outer side of the lower fastening portion 152b and may be in close contact with the first gasket 116 and the inner insulating member 117. In addition, a lower surface 150a of the lower fastening portion 152b may be coupled through welding while in contact with an upper surface of the first current collector plate 130. Such a lower fastening portion 152b may protrude downward further than the lower surface of the central portion 113 of the case 110. In addition, since the upper surface of the first current collector plate 130 is coupled to the lower surface 150a of the terminal 150, which is a lower surface of the lower fastening portion 152b, through welding, the lower fastening portion 152b may be interposed between the central portion 113 and the first current collector plate 130. That is, the central portion 113 of the case 110 and the first current collector plate 130 may be spaced apart from each other as much as a height of the lower fastening portion 152b.

In the cylindrical secondary battery 100, since the central portion 113 of the case 110 is convex in an outward direction, even when the first current collector plate 130 and the central portion 113 of the case 110 are spaced apart from each other as much as the height of the lower fastening portion 152b, a separation distance between the upper surface portion 111 of the case 110 and the first current collector plate 130 can be reduced.

As another example, as shown in FIG. 5B, a lower portion of the fastening portion 152 may be press-deformed (press-molded) through riveting and may press the first gasket 116 to seal the terminal hole 113b. In an embodiment, the fastening portion 152 may have a diameter that gradually increases from the terminal hole 113b in an inward direction of the case 110. The fastening portion 152 may include the upper fastening portion 152a positioned in the terminal hole 113b of the case 110 and the lower fastening portion 152b positioned inside the case 110. A diameter of the lower fastening portion 152b may be greater than a diameter of the upper fastening portion 152a. That is, the lower fastening portion 152b may overlap the case 110 in a plan view. In addition, a diameter of the lower surface 150a of the fastening portion 152 may be greater than diameters of other regions thereof. In an embodiment, the lower surface 150a of the fastening portion 152 may be a planar surface. Of course, even when the lower fastening portion 152b is riveted, in the cylindrical secondary battery 100, the central portion 113 of the case 110 is convex in an outward direction, and, thus, even when the first current collector plate 130 and the central portion 113 of the case 110 are spaced apart from each other as much as the height of the lower fastening portion 152b, a separation distance between the upper surface portion 111 of the case 110 and the first current collector plate 130 can be reduced.

The first gasket 116 may be interposed between the fastening portion 152 and the terminal hole 113b of the case 110, and an upper end portion thereof may extend between the head 151 and the central portion 113 of the case 110. In an embodiment, an end of the upper end portion of the first gasket 116 may extend further than the head 151. That is, the first gasket 116 is interposed between the lower surface of the head of the terminal 150 and an upper surface of the central portion 113 of the case 110 and between the fastening portion 152 of the terminal 150 and the terminal hole 113b of the case 110, thereby electrically insulating and sealing the terminal 150 and the case 110 from each other. Although the first gasket 116 is shown as being integrally formed, in an embodiment, a component of the first gasket 116 interposed between the lower surface of the head of the terminal 150 and the upper surface of the central portion 113 of the case 110 may be separate from a component of the first gasket 116 interposed between the fastening portion 152 of the terminal 150 and the terminal hole 113b of the case 110. The first gasket 116 may be in contact with the upper and lower surfaces of the central portion 113 of the case 110. In an embodiment, the first gasket 116 may be in contact with the inner insulating member 117.

The cap plate 160 may be a circular metal plate and may be coupled to the lower end portion of the case 110. A lower surface of the cap plate 160 may be exposed to the outside. The cap plate 160 may be coupled to the lower end portion of the case 110 with the second gasket 118 interposed therebetween and thus prevented or substantially prevented from being electrically connected to the case 110. The cap plate 160 need not be electrically connected to a positive electrode or a negative electrode of the electrode assembly 120 and thus may have no separate electrical polarity.

The cap plate 160 may be fixed in a state in which an edge region 162 is positioned between the beading part 114 and the crimping part 115 of the case 110. In an embodiment, in a state in which the second gasket 118 is placed below the beading part 114 of the case 110, the cap plate 160 may be seated below the second gasket 118. Thereafter, the crimping part 115 of the case 110 is bent in an inward direction of the cap plate 160 to press the second gasket 118 and couple the cap plate 160 and the case 110. In an embodiment, the second gasket 118 may be made of a resin material, such as PE, PP, or PET. The second gasket 118 may press the cap plate 160 against the case 110 to seal the cap plate 160 and may prevent or substantially prevent the cap plate 160 from being separated from the case 110. An upper portion of the second gasket 118 may be interposed between the beading part 114 and the cap plate 160, and a lower portion thereof may be interposed between the crimping part 115 and the cap plate 160. A lower end portion of the second gasket 118 may protrude further than the crimping part 115 toward a center of the cap plate 160.

The cap plate 160 may include a central region 161 positioned below the second current collector plate 140 and an edge region 162 interposed between the beading part 114 and the crimping part 115 of the case 110 and coupled to the case 110. In an embodiment, the central region 161 of the cap plate 160 may be concave in an inward direction of the case 110 relative to the edge region 162. That is, the edge region 162 of the cap plate 160 may protrude further than the central region 161 in an outward direction of the case 110. In an embodiment, the cap plate 160 may further include a connection region 163 for connecting the central region 161 and the edge region 162. The connection region 163 may be provided to be inclined due to a stepped portion between the central region 161 and the edge region 162. In an embodiment, bent portions may be further provided between the connection region 163 and the central region 161 and between the connection region 163 and the edge region 162.

The cap plate 160 is provided with a vent 165 in the central region 161 to be opened by a certain pressure (e.g., a set pressure). The vent 165 may be thinner than other regions of the cap plate 160. In an embodiment, the vent 165 may be a notch formed upward from the lower surface of the cap plate 160.

That is, in the cylindrical secondary battery 100, when excessive internal pressure is generated inside the case 110, the vent 165 is fractured, thereby discharging the excessive internal pressure. In an embodiment, the vent 165 of the cap plate 160 may be spaced apart from a center thereof and may have a ring shape in a plan view. As another example, the vent 165 may have at least one pattern having a straight or curved shape in a plan view. The vent 165 may be thinner than other regions of the cap plate 160. In an embodiment, the vent 165 may have a thickness of 0.05 mm to 0.35 mm. When the thickness of the vent 165 is less than 0.05 mm, deformation or cracks may occur even when internal pressure of the cylindrical secondary battery 100 does not increase, and when the thickness of the vent 165 exceeds 0.35 mm, the vent 165 may not be fractured even when internal pressure of the cylindrical secondary battery 100 increases and thus may not operate as the vent 165.

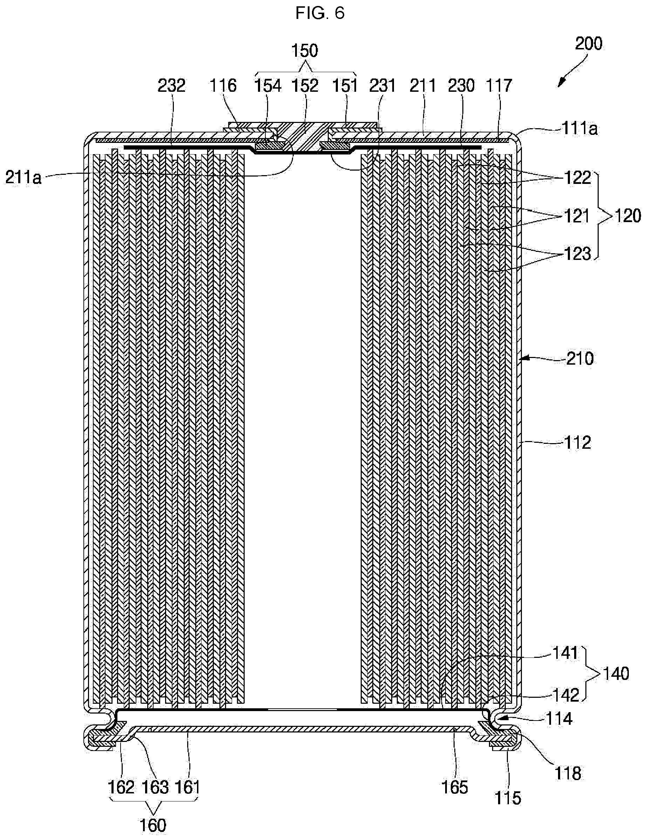

FIG. 6 illustrates a cylindrical secondary battery 200 according to one or more embodiments of the present disclosure. The cylindrical secondary battery 200 according to the present disclosure shown in FIG. 6 includes a case 210, an electrode assembly 120 accommodated in the case 210, a terminal 150 coupled to a terminal hole formed at an end portion of the case 210, and a cap plate 160 for sealing an opening formed at another end portion of the case 210. In addition, the cylindrical secondary battery 200 may include a first current collector plate 230 for electrically connecting a first electrode plate 121 of the electrode assembly 120 and the terminal 150 and a second current collector plate 140 for connecting the case 210 and a second electrode plate 122 of the electrode assembly 120.

The electrode assembly 120, the second current collector plate 140, and the cap plate 160 of the cylindrical secondary battery 200 may be the same as those of the cylindrical secondary battery 100 shown in FIGS. 1 to 5B. In addition, the case 210 of the cylindrical secondary battery 200 may have a structure similar to that of the case 110 of the cylindrical secondary battery 100 shown in FIGS. 1 to 5B and may be different from the case 110 of the cylindrical secondary battery 100 in that a central portion 113 is not provided.

Therefore, the case 210 and the first current collector plate 230 of the cylindrical secondary battery 200, which are different from those of the cylindrical secondary battery 100, will be mainly described.

An upper surface portion 211 of the case 210 may have a terminal hole 211a which has a circular plane shape and passes through a central portion thereof. In addition, the case 210 may include a side surface portion 112 extending downward from an edge of the upper surface portion 211. In addition, a beading part 114 recessed inward from a lower end portion of the side surface portion 112 may be formed on the cap plate 160, and a crimping part 115 bent inward may be formed below the cap plate 16. In addition, the cylindrical secondary battery 200 may include a first gasket 116 interposed between the terminal 150 and the case 210 and may further include an inner insulating member 117 provided to cover the inside of the upper surface portion 211 and a second gasket 118 interposed between the case 210 and the cap plate 160. The side surface portion 112, the beading part 114, the crimping part 115, the first gasket 116, the inner insulating member 117, and the second gasket 118 of the case 210 may have similar structures to those of the case 110 of the cylindrical secondary battery 100. However, the upper surface portion 211 may have a flat circular plate shape without a separate stepped portion and may include the terminal hole 211a passing through a central portion thereof.

The first current collector plate 230 may be a circular metal plate having a shape corresponding to an upper surface of the electrode assembly 120. A planar size of the first current collector plate 130 may be less than or equal to a size of the upper surface of the electrode assembly 120. In an embodiment, the first current collector plate 230 may be made of aluminum (Al).

In a state in which a lower surface of the first current collector plate 230 is in contact with the upper surface of the electrode assembly 120, the first current collector plate 230 may be fixed and electrically connected to the first electrode plate 121 exposed at an upper portion of the electrode assembly 120 through welding. In a state in which an upper surface of the first current collector plate 230 is in contact with a lower surface of the terminal 150, the first current collector plate 230 may be fixed and electrically connected to the terminal 150 through welding. The first current collector plate 230 serves as a passage for current flow between the first electrode plate 121 of the electrode assembly 120 and the terminal 150. After the first current collector plate 230 is welded to the electrode assembly 120, the first current collector plate 130 may be stored in the case 110 and then welded to the terminal 150. In an embodiment, the first current collector plate 230 may have a thickness of 0.2 mm to 1.5 mm. In an embodiment, the thickness of the first current collector plate 230 is less than a lower thickness of a fastening portion 152 of the terminal 150 to be described below, thereby improving weldability.

The first current collector plate 230 may be a circular metal plate having a shape corresponding to the upper surface of the electrode assembly 120. An area (or size) of the first current collector plate 230 may be less than an area (or size) of the upper surface of the electrode assembly 120. In an embodiment, the first current collector plate 230 may be made of aluminum (Al). In a state in which the lower surface of the first current collector plate 230 is in contact with the upper surface of the electrode assembly 120, the first current collector plate 230 may be fixed and electrically connected to the first electrode plate 121 exposed at the upper portion of the electrode assembly 120 through welding. In a state in which the upper surface of the first current collector plate 230 is in contact with the lower surface of the terminal 150, the first current collector plate 230 may be fixed and electrically connected to the terminal 150 through welding. The first current collector plate 230 serves as a passage for current flow between the first electrode plate 121 of the electrode assembly 120 and the terminal 150.

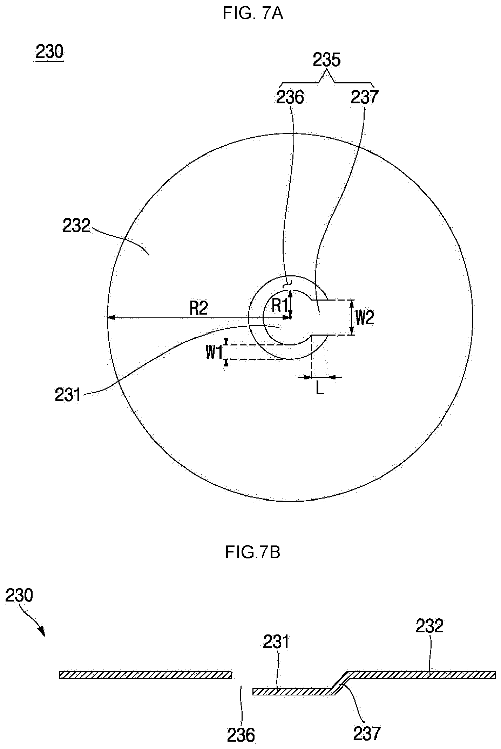

Referring to FIGS. 7A and 7B, the first current collector plate 230 may include a terminal coupling portion 231, an electrode plate coupling portion 232, and a fuse portion 235. In an embodiment, the terminal coupling portion 231 is positioned at a central portion of the first current collector plate 230 and may be formed in an approximately circular shape. The fastening portion 152 of the terminal 150 may be welded to an upper surface of the terminal coupling portion 231. The electrode plate coupling portion 232 may be positioned outside the terminal coupling portion 231 and may be electrically connected to the first electrode plate 121 of the electrode assembly 120.

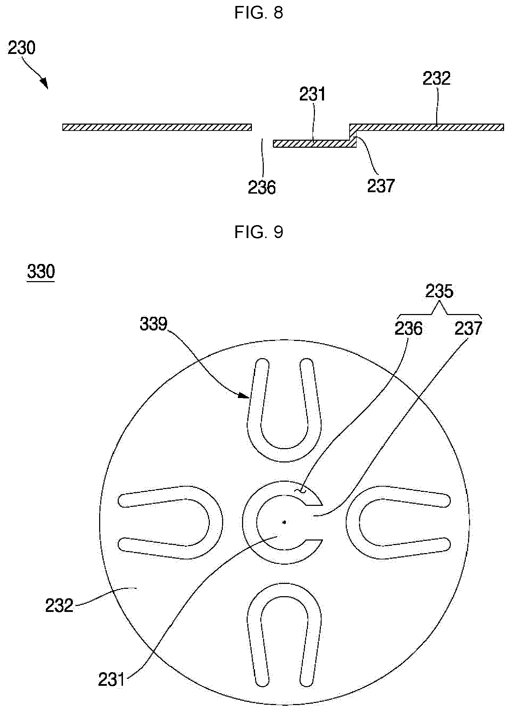

The terminal coupling portion 231 may protrude further than the electrode plate coupling portion 232 in an inward direction of the electrode assembly 120. That is, the terminal coupling portion 231 may protrude in a direction away from the fastening portion 152 of the terminal 150. That is, a stepped portion may be provided between the terminal coupling portion 231 and the electrode plate coupling portion 232. In an embodiment, an electrode plate connection portion 237 for connecting the terminal coupling portion 231 and the electrode plate coupling portion 232 may be further included. The electrode plate connection portion 237 may be provided to be inclined due to the stepped portion between the terminal coupling portion 231 and the electrode plate coupling portion 232. In an embodiment, as shown in FIG. 8, the electrode plate connection portion 237 may vertically connect the terminal coupling portion 231 and the electrode plate coupling portion 232.

An area (or size) of the terminal coupling portion 231 may be greater than an area (or size) of the fastening portion 152. In other words, a diameter of the terminal coupling portion 231 may be greater than a diameter of the fastening portion 152. In an embodiment, the diameter of the terminal coupling portion 231 may be less than that of a core hole of the electrode assembly 120. Here, the core hole of the electrode assembly 120 may be a hole passing through a central portion of the electrode assembly 120 in a longitudinal direction. That is, in the first current collector plate 230, the terminal coupling portion 231 protruding downward may be inserted into the core hole of the electrode assembly 120, and the electrode plate coupling portion 232 may be welded while in contact with the upper surface of the electrode assembly 120.

Since the terminal coupling portion 231 of the first current collector plate 230 protrudes inward, even when the first current collector plate 230 is spaced apart from the upper surface portion 211 of the case 210 by the lower fastening portion 152b, it is possible to reduce a separation distance between the upper surface portion 211 of the case 210 and the electrode plate connection portion of the first current collector plate 230.

In an embodiment, a ratio of a radius R1 of the terminal coupling portion 231 to a radius R2 of the first current collector plate 230 may be in a range of 1/7 to 1/5. For example, when the ratio of the radius R1 of the terminal coupling portion 231 to the radius R2 of the first current collector plate 230 is less than 1/7, the fastening portion 152 of the terminal 150 may be difficult to weld. When the ratio of the radius R1 of the terminal coupling portion 231 to the radius R2 of the first current collector plate 230 is greater than 1/5, an area of the electrode plate coupling portion 232 may be reduced, and, thus, a positive electrode uncoated portion of the first electrode plate 121 may be difficult to weld.

The electrode plate coupling portion 232 may be positioned outside the terminal coupling portion 231 and may be electrically connected to the first electrode plate 121 of the electrode assembly 120. For example, the positive electrode uncoated portion of the first electrode plate 121 protruding in an upward direction of the electrode assembly 120 may be welded to a lower surface of the electrode plate coupling portion 232.

The fuse portion 235 may be formed between the terminal coupling portion 231 and the electrode plate coupling portion 232. The fuse portion 235 may include a fuse hole 236 and an electrode plate connection portion 237. The fuse portion 235 may block a current flowing in the secondary battery 100 by melting and cutting the electrode plate connection portion using heat generated when a short circuit or overcurrent occurs in the secondary battery 200.

In an embodiment, the fuse hole 236 is formed in approximately a "C" shape along a portion of an outer periphery of the terminal coupling portion 231, and both ends of the fuse hole 236 may face each other. The fuse hole 236 may separate the terminal coupling portion 231 from the electrode plate coupling portion 232. That is, the terminal coupling portion 231 and the electrode plate coupling portion 232 may be spaced apart from each other by the fuse hole 236. In an embodiment, a width W1 of the fuse hole 236 may be in a range of about 1 mm to 4 mm and, in an embodiment, is 2 mm. The width W1 of the fuse hole 236 may define a length L of the electrode plate connection portion 237.

The electrode plate connection portion 237 may connect the terminal coupling portion 231 and the electrode plate coupling portion 232. The electrode plate connection portion 237 is melted and cut by heat generated when a short circuit or overcurrent occurs in the cylindrical secondary battery 200, thereby blocking a current to improve safety. In an embodiment, a width W2 of the electrode plate connection portion 237 may be in a range of about 3 mm to 5 mm and, in an embodiment, is 4 mm. The width W2 of the electrode plate connection portion 237 may be a length between an end and another end of the fuse hole 236. For example, when the width W2 of the electrode plate connection portion 237 is less than 3 mm, a distance between both ends of the fuse hole 236 is too short, resulting in a risk of the electrode plate connection portion 237 being damaged or disconnected by even a small impact. When the width W2 of the electrode plate connection portion 237 is greater than 5 mm, a cross-sectional area through which a current flows may increase, and, thus, the electrode plate connection portion 237 may not be cut by heat generated by a short circuit or overcurrent and may not function as a fuse.

FIGS. 9 to 13 are plan views illustrating some embodiments of a first current collector plate in the cylindrical secondary battery shown in FIG. 6.

Referring to FIG. 9, a first current collector plate 330 may include a terminal coupling portion 231, an electrode plate coupling portion 232, a fuse portion 235, and buffer slits 339. The buffer slits 339 may be formed outside the fuse portion 235. The buffer slits 339 may be positioned in all directions (e.g., up/down/left/right directions in a plan view) with respect the fuse portion 235. The buffer slit 339 may have an approximate "U" shape or horseshoe shape and may be disposed such that an open region faces an edge. An inner region of the buffer slit 339 is spaced apart from the first current collector plate 330 and thus is vertically movable by a certain interval. Accordingly, the buffer slit 339 may apply elasticity to the electrode assembly 120 and may absorb an impact applied to the cylindrical secondary battery 200 to secure mobility of the electrode assembly 120.

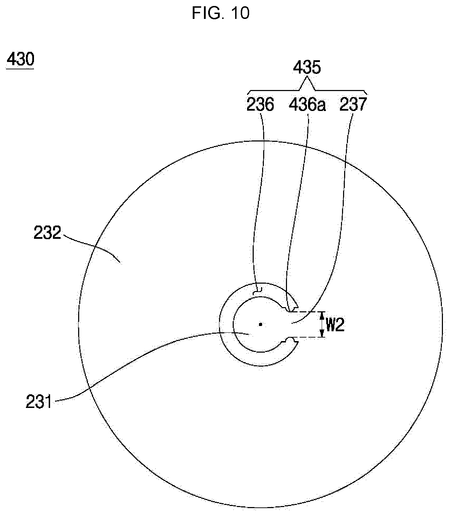

Referring to FIG. 10, a first current collector plate 430 may include a terminal coupling portion 231, an electrode plate coupling portion 232, and a fuse portion 435. The fuse portion 435 may include a fuse hole 236, an electrode plate connection portion 237, and a protrusion hole 436a. The protrusion hole 436a may be formed at each of an end portion and another end portion of the fuse hole 236. The protrusion holes 436a formed at both end portions of the fuse hole 236 may protrude toward and be close to each other. In an embodiment, a width of the protrusion hole 436a may be less than a width of the fuse hole 236. The protrusion hole 436a reduces a width W2 of the electrode plate connection portion 237, that is, a cross-sectional area through which a current flows, such that a function of the fuse portion 435 can be improved.

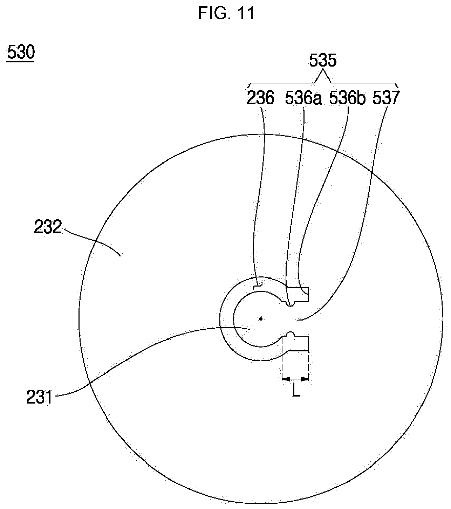

Referring to FIG. 11, a first current collector plate 530 may include a terminal coupling portion 231, an electrode plate coupling portion 232, and a fuse portion 535. The fuse portion 535 may include a fuse hole 236, a connection portion 537 a protrusion hole 536a, and an extension hole 536b. The extension hole 536b may extend toward the outside of the first current collector plate 530 from each of both end portions of the fuse hole 236. The extension holes 536b formed at both end portions of the fuse hole 236 may be in parallel. The extension hole 536b may increase a length L of the connection portion 537, that is, a length through which a current flows, such that a function of the fuse portion 535 can be improved.

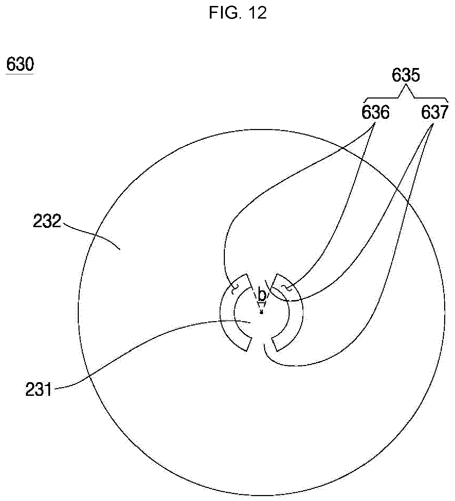

Referring to FIG. 12, a first current collector plate 630 may include a terminal coupling portion 231, an electrode plate coupling portion 232, and a fuse portion 635. The fuse portion 635 may include two fuse holes 636 spaced apart from each other and two connection portions 637 positioned between the fuse holes 636. The two fuse holes 636 may be positioned concentrically with respect to a center of the first current collector plate 630 and may be symmetrical to each other. In an embodiment, an angle b formed by the connection portions 637 with respect to the center of the first current collector plate 630 may be in a range of about 30 degrees to 50 degrees.

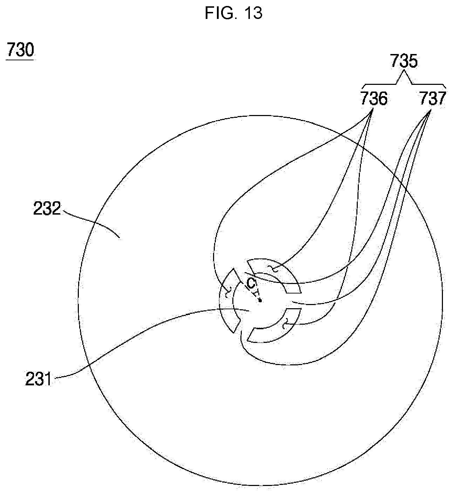

Referring to FIG. 13, a first current collector plate 730 may include a terminal coupling portion 231, an electrode plate coupling portion 232, and a fuse portion 735. The fuse portion 735 may include three fuse holes 736 spaced apart from each other and three connection portions 737 positioned between the fuse holes 736. The three fuse holes 736 may be positioned concentrically with respect to a center of the first current collector plate 730 and may be formed to have a same size. In an embodiment, an angle c formed by the connection portions 737 with respect to a center of the first current collector plate 730 may be in a range of about 8 degrees to 15 degrees.

In a cylindrical secondary battery according to one or more embodiments of the present disclosure, even when a first current collector plate of a case is spaced apart from the case as much as a height of a lower fastening portion, since a central portion of the case is convex in an outward direction or a terminal coupling portion of the first current collector plate is convex in an inward direction, it is possible to reduce a separation distance between an upper surface portion of the case and the first current collector plate, and thereby reduce the loss of internal space of the case.

While some example embodiments for carrying out the cylindrical secondary battery according to the present disclosure have been described herein, the present disclosure is not limited thereto, and it will be understood by a person skilled in the art that various changes in form and details may be made therein without departing from the scope of the claims. The disclosure of the invention also encompasses the concepts defined by the following numbered clauses:
Clause 1. A cylindrical secondary battery comprising:
   an electrode assembly comprising a first electrode plate, a separator, and a second electrode plate;
   a case having a cylindrical shape, in which the electrode assembly is accommodated, and of which a lower end portion is open;
   a terminal passing through an upper surface portion of the case and coupled to the case through a first gasket;
   a first current collector plate arranged between an upper surface of the electrode assembly and the case, and electrically connecting the first electrode plate and the terminal; and
   a cap plate configured to seal the lower end portion of the case,
   wherein the case comprises:
      the upper surface portion having a flat plate shape;
      a central portion which is positioned at a central portion of the upper surface portion, has a terminal hole, and protrudes outward further than the upper surface portion; and
      a side surface portion extending downward from an edge of the upper surface portion.
Clause 2. The cylindrical secondary battery of clause 1, wherein the terminal hole has a circular shape or a polygonal shape.
Clause 3. The cylindrical secondary battery of clause 2, wherein the terminal comprises:
   a head arranged on a central portion of the case; and
   a fastening portion which extends from the central portion of the head in an inward direction of the case, is integrally formed with the head, and passes through the terminal hole.
Clause 4. The cylindrical secondary battery of clause 3, wherein
   an outer diameter of the fastening portion corresponds to a shape of the terminal hole in a plan view, and
   a diameter of the fastening portion is less than that of the terminal hole.
Clause 5. The cylindrical secondary battery of clause 3 or 4, wherein a planar size of the head is greater than a planar size of the fastening portion.
Clause 6. The cylindrical secondary battery of clause 3, 4, or 5, wherein the fastening portion comprises:
   an upper fastening portion connected to the head and located in the terminal hole of the upper surface portion of the case; and
   a lower fastening portion extending downward from the upper fastening portion and located inside the case.
Clause 7. The cylindrical secondary battery of clause 6, wherein an outer diameter of the lower fastening portion is greater than an outer diameter of the upper fastening portion.
Clause 8. The cylindrical secondary battery of clause 6 or 7, wherein
   an outer diameter of the lower fastening portion is less than an outer diameter of the upper fastening portion, and
   a groove is formed inward from an outer surface of the lower fastening portion.
Clause 9. The cylindrical secondary battery of clause 8, further comprising a coupling member inserted into and coupled to the groove formed outside the lower fastening portion.
Clause 10. The cylindrical secondary battery of any one of clauses 3 to 9, wherein the first gasket is arranged between the head of the terminal and an upper surface of the central portion and between the terminal hole and the fastening portion of the terminal.
Clause 11. The cylindrical secondary battery of any one of clauses 1 to 10, wherein the case further comprises an inclined connection portion connecting the central portion and the upper surface portion.
Clause 12. The cylindrical secondary battery of clause 11, wherein the case further comprises a bent portion bent in a rounded shape between the upper surface portion and the side surface portion.
Clause 13. The cylindrical secondary battery of clause 12, further comprising an inner insulating member covering inner surfaces of the central portion, the connection portion, the upper surface portion, and the bent portion of the case.
Clause 14. The cylindrical secondary battery of clause 11 or 12, further comprising an inner insulating member covering inner surfaces of the central portion, the connection portion, and the upper surface portion of the case.
Clause 15. The cylindrical secondary battery of any one of clauses 1 to 14, wherein the central portion has a circular shape or a polygonal shape in a plan view.
Clause 16. The cylindrical secondary battery of any one of clauses 1 to 15, wherein a thickness of the central portion is less than or equal to a thickness of the upper surface portion.
Clause 17. The cylindrical secondary battery of any one of clauses 1 to 16, wherein a thickness of the central portion is in a range of 50% to 100% of a thickness of the upper surface portion.
Clause 18. The cylindrical secondary battery of any one of clauses 1 to 17, further comprising an inner insulating member covering an inner surface of the central portion.
Clause 19. The cylindrical secondary battery of any one of clauses 1 to 18, wherein, in the electrode assembly, a positive electrode uncoated portion not coated with a positive electrode active material protrudes upward from the first electrode plate, and a negative electrode uncoated portion not coated with a negative electrode active material protrudes downward from the second electrode plate.
Clause 20. The cylindrical secondary battery of any one of clauses 1 to 19, wherein the case further comprises:
   a beading part recessed into the case on the cap plate; and
   a crimping part formed below the cap plate by the lower end portion of the case being bent in an inward direction and configured to fix the cap plate.
Clause 21. The cylindrical secondary battery of clause 20, further comprising a second gasket arranged between the cap plate and the beading part and between the cap plate and the crimping part,
   wherein the cap plate is non-polar.
Clause 22. The cylindrical secondary battery of clause 21, wherein a lower end portion of the second gasket protrudes further than the crimping part toward a center of the cap plate.
Clause 23. The cylindrical secondary battery of clause 21 or 22, wherein the cap plate comprises:
   an edge region between the crimping part and the beading part; and
   a central region which is concave in an inward direction of the case relative to the edge region.
Clause 24. The cylindrical secondary battery of clause 23, wherein the cap plate comprises a vent which is a notch formed upward from a lower surface of the cap plate in the central region.
Clause 25. The cylindrical secondary battery of clause 24, wherein the vent has at least one pattern of which a planar shape is a ring shape, a straight shape, or a curved shape spaced apart from a center.
Clause 26. The cylindrical secondary battery of any one of clauses 21 to 25, further comprising a second current collector plate which has a circular plate shape corresponding to a lower surface of the electrode assembly and is in contact with and electrically connected to the second electrode plate exposed at the lower surface of the electrode assembly.
Clause 27. The cylindrical secondary battery of clause 26, wherein the second current collector plate comprises:
   a planar portion which has a circular shape and is in contact with the lower surface of the electrode assembly; and
   an extension portion extending downward from an edge of the planar portion.
Clause 28. The cylindrical secondary battery of clause 27, wherein the extension portion of the second current collector plate is between the second gasket and the beading part.
Clause 29. The cylindrical secondary battery of clause 27 or 28, wherein the extension portion of the second current collector plate is bent or rounded along the beading part.
Clause 30. A cylindrical secondary battery comprising:
   an electrode assembly comprising a first electrode plate, a separator, and a second electrode plate;
   a case in which the electrode assembly is accommodated and of which a lower end portion is open;
   a terminal passing through an upper surface portion of the case and coupled to the case through a first gasket;
   a first current collector plate arranged between an upper surface of the electrode assembly and the case and electrically connecting the first electrode plate and the terminal; and
   a cap plate configured to seal the lower end portion of the case,
   wherein the first current collector plate comprises:
      an electrode plate coupling portion connected to the first electrode plate of the electrode assembly; and
      a terminal coupling portion arranged at a central portion of the electrode plate coupling portion and protruding toward the electrode assembly.
Clause 31. The cylindrical secondary battery of clause 30, wherein the first current collector plate further comprises a fuse portion between the terminal coupling portion and the electrode plate coupling portion.
Clause 32. The cylindrical secondary battery of clause 31, wherein the fuse portion comprises:
   a fuse hole formed along a portion of an outer periphery of the terminal coupling portion; and
   an electrode plate connection portion connecting the terminal coupling portion and the electrode plate coupling portion.
Clause 33. The cylindrical secondary battery of clause 32, wherein the electrode plate connection portion obliquely or vertically connects the terminal coupling portion and the electrode plate coupling portion with a step difference therebetween.
Clause 34. The secondary battery of clause 32 or 33, wherein:
   the fuse portion further comprises protrusion holes formed at end portions of the fuse hole; and
   the protrusion holes protrude toward each other.
Clause 35. The cylindrical secondary battery of clause 32, 33, or 34 wherein
   the fuse portion further comprises extension holes extending from ends of the fuse hole toward an outer side of the first current collector plate, and
   the extension holes are in parallel.
Clause 36. The cylindrical secondary battery of any one of clauses 31 to 35, wherein the first current collector plate comprises a plurality of buffer slits located outside the fuse portion to be symmetrical to each other with respect to the fuse portion.
Clause 37. The cylindrical secondary battery of clause 36, wherein a buffer slit of the plurality of buffer slits has a "U" shape.
Clause 38. The cylindrical secondary battery of any one of clauses 31 to 37, wherein
   the fuse portion comprises one or more fuse holes, and
   the fuse holes are located concentrically with respect to a center of the first current collector plate.
Clause 39. The cylindrical secondary battery of any one of clauses 30 to 38, wherein the terminal comprises:
   a head arranged on a central portion of the case; and
   a fastening portion which extends in an inward direction of the case from the central portion of the head, is integrally formed with the head, and passes through the terminal hole.
Clause 40. The cylindrical secondary battery of clause 39, wherein a diameter of the terminal coupling portion is greater than that of a lower surface of the fastening portion and is less than that of a core hole of the electrode assembly.
Clause 41. The cylindrical secondary battery of clause 39 or 40, wherein the terminal coupling portion is inserted into a core hole of the electrode assembly.

## Claims

1. A cylindrical secondary battery comprising:
an electrode assembly comprising a first electrode plate, a separator, and a second electrode plate;
a case having a cylindrical shape, in which the electrode assembly is accommodated, and of which a lower end portion is open;
a terminal passing through an upper surface portion of the case and coupled to the case through a first gasket;
a first current collector plate arranged between an upper surface of the electrode assembly and the case, and electrically connecting the first electrode plate and the terminal; and
a cap plate configured to seal the lower end portion of the case,
wherein the case comprises:
the upper surface portion having a flat plate shape;
a central portion which is positioned at a central portion of the upper surface portion, has a terminal hole, and protrudes outward further than the upper surface portion; and
a side surface portion extending downward from an edge of the upper surface portion.

2. The cylindrical secondary battery of claim 1, wherein the terminal hole has a circular shape or a polygonal shape.

3. The cylindrical secondary battery of claim 1 or 2, wherein the terminal comprises:
a head arranged on a central portion of the case; and
a fastening portion which extends from the central portion of the head in an inward direction of the case, is integrally formed with the head, and passes through the terminal hole, optionally wherein
an outer diameter of the fastening portion corresponds to a shape of the terminal hole in a plan view, and
a diameter of the fastening portion is less than that of the terminal hole, further optionally, wherein a planar size of the head is greater than a planar size of the fastening portion.

4. The cylindrical secondary battery of claim 3, wherein the fastening portion comprises:
an upper fastening portion connected to the head and located in the terminal hole of the upper surface portion of the case; and
a lower fastening portion extending downward from the upper fastening portion and located inside the case, optionally, wherein an outer diameter of the lower fastening portion is greater than an outer diameter of the upper fastening portion, optionally wherein
an outer diameter of the lower fastening portion is less than an outer diameter of the upper fastening portion, and
a groove is formed inward from an outer surface of the lower fastening portion, optionally, further comprising a coupling member inserted into and coupled to the groove formed outside the lower fastening portion.

5. The cylindrical secondary battery of claim 3 or 4, wherein the first gasket is arranged between the head of the terminal and an upper surface of the central portion and between the terminal hole and the fastening portion of the terminal.

6. The cylindrical secondary battery of any one of claims 1 to 5, wherein the case further comprises an inclined connection portion connecting the central portion and the upper surface portion, optionally wherein the case further comprises a bent portion bent in a rounded shape between the upper surface portion and the side surface portion, further optionally, further comprising an inner insulating member covering inner surfaces of the central portion, the connection portion, the upper surface portion, and the bent portion of the case, further optionally wherein the cylindrical secondary battery comprising an inner insulating member covering inner surfaces of the central portion, the connection portion, and the upper surface portion of the case.

7. The cylindrical secondary battery of any one of claims 1 to 6, wherein the central portion has a circular shape or a polygonal shape in a plan view.

8. The cylindrical secondary battery of any one of claims 1 to 7, wherein a thickness of the central portion is less than or equal to a thickness of the upper surface portion.

9. The cylindrical secondary battery of any one of claims 1 to 8, wherein a thickness of the central portion is in a range of 50% to 100% of a thickness of the upper surface portion.

10. The cylindrical secondary battery of any one of claims 1 to 9, comprising an inner insulating member covering an inner surface of the central portion.

11. The cylindrical secondary battery of any one of claims 1 to 10, wherein, in the electrode assembly, a positive electrode uncoated portion not coated with a positive electrode active material protrudes upward from the first electrode plate, and a negative electrode uncoated portion not coated with a negative electrode active material protrudes downward from the second electrode plate.

12. The cylindrical secondary battery of any one of claims 1 to 11, wherein the case further comprises:
a beading part recessed into the case on the cap plate; and
a crimping part formed below the cap plate by the lower end portion of the case being bent in an inward direction and configured to fix the cap plate, optionally further comprising a second gasket arranged between the cap plate and the beading part and between the cap plate and the crimping part, wherein the cap plate is non-polar, optionally, wherein a lower end portion of the second gasket protrudes further than the crimping part toward a center of the cap plate, further optionally, wherein the cap plate comprises:
an edge region between the crimping part and the beading part; and
a central region which is concave in an inward direction of the case relative to the edge region, optionally, wherein the cap plate comprises a vent which is a notch formed upward from a lower surface of the cap plate in the central region, further optionally, wherein the vent has at least one pattern of which a planar shape is a ring shape, a straight shape, or a curved shape spaced apart from a center, Still further optionally, wherein the cylindrical secondary battery further comprises a second current collector plate which has a circular plate shape corresponding to a lower surface of the electrode assembly and is in contact with and electrically connected to the second electrode plate exposed at the lower surface of the electrode assembly, optionally wherein the second current collector plate comprises:
a planar portion which has a circular shape and is in contact with the lower surface of the electrode assembly; and
an extension portion extending downward from an edge of the planar portion, optionally, wherein the extension portion of the second current collector plate is between the second gasket and the beading part, further optionally, wherein the extension portion of the second current collector plate is bent or rounded along the beading part.

13. A cylindrical secondary battery comprising:
an electrode assembly comprising a first electrode plate, a separator, and a second electrode plate;
a case in which the electrode assembly is accommodated and of which a lower end portion is open;
a terminal passing through an upper surface portion of the case and coupled to the case through a first gasket;
a first current collector plate arranged between an upper surface of the electrode assembly and the case, and electrically connecting the first electrode plate and the terminal; and
a cap plate configured to seal the lower end portion of the case,
wherein the first current collector plate comprises:
an electrode plate coupling portion connected to the first electrode plate of the electrode assembly; and
a terminal coupling portion arranged at a central portion of the electrode plate coupling portion and protruding toward the electrode assembly.

14. The cylindrical secondary battery of claim 13, wherein the first current collector plate further comprises a fuse portion between the terminal coupling portion and the electrode plate coupling portion, optionally wherein the fuse portion comprises:
a fuse hole formed along a portion of an outer periphery of the terminal coupling portion; and an electrode plate connection portion connecting the terminal coupling portion and the electrode plate coupling portion, optionally, wherein the electrode plate connection portion obliquely or vertically connects the terminal coupling portion and the electrode plate coupling portion with a step difference therebetween, further optionally, wherein:
the fuse portion further comprises protrusion holes formed at end portions of the fuse hole; and
the protrusion holes protrude toward each other, still further optionally, wherein the fuse portion further comprises extension holes extending from ends of the fuse hole toward an outer side of the first current collector plate, and the extension holes are in parallel, further optionally, wherein the first current collector plate comprises a plurality of buffer slits located outside the fuse portion to be symmetrical to each other with respect to the fuse portion, optionally, wherein a buffer slit of the plurality of buffer slits has a "U" shape, still further optionally, wherein the fuse portion comprises one or more fuse holes, and the fuse holes are located concentrically with respect to a center of the first current collector plate.

15. The cylindrical secondary battery of any one of claims 13 or 14, wherein the terminal comprises:
a head arranged on a central portion of the case; and
a fastening portion which extends in an inward direction of the case from the central portion of the head, is integrally formed with the head, and passes through the terminal hole, optionally, wherein a diameter of the terminal coupling portion is greater than that of a lower surface of the fastening portion and is less than that of a core hole of the electrode assembly, further optionally, wherein the terminal coupling portion is inserted into a core hole of the electrode assembly.
